(19) Europäisches Patentamt
European Patent Office
Office européen des brevets

(11) **EP 3 503 046 B1**

(12) **EUROPÄISCHE PATENTSCHRIFT**

(45) Veröffentlichungstag und Bekanntmachung des Hinweises auf die Patenterteilung:
**14.10.2020 Patentblatt 2020/42**

(51) Int Cl.:
**G07D 7/121** *(2016.01)* **G07D 7/00** *(2016.01)*

(21) Anmeldenummer: **17210068.7**

(22) Anmeldetag: **22.12.2017**

(54) **SYSTEM, WELCHES EINE VERARBEITUNGSEINRICHTUNG UND EINE DARAN ANGESCHLOSSENE KAMERA AUFWEIST, ZUM NACHWEIS EINES MASCHINENLESBAREN SICHERHEITSMERKMALS EINES WERTDOKUMENTS SOWIE VERFAHREN ZUM AUSTAUSCH EINER KAMERA EINES SOLCHEN SYSTEMS**

SYSTEM COMPRISING A PROCESSING DEVICE AND A CONNECTED CAMERA, FOR DETECTING OF A MACHINE-READABLE SECURITY FEATURE OF A VALUABLE DOCUMENT AND METHOD FOR EXCHANGING A CAMERA IN SUCH A SYSTEM

SYSTÈME DE DÉTECTION D'UNE CARACTÉRISTIQUE DE SÉCURITÉ LISIBLE PAR MACHINE D'UN DOCUMENT DE VALEUR, LEDIT SYSTÈME COMPORTANT UN DISPOSITIF DE TRAITEMENT ET UNE CAMÉRA CONNECTÉE AUDIT DISPOSITIF AINSI QUE PROCÉDÉ DE REMPLACEMENT D'UNE CAMÉRA D'UN TEL SYSTÈME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.06.2019 Patentblatt 2019/26**

(73) Patentinhaber: **CI Tech Sensors AG**
**3400 Burgdorf (CH)**

(72) Erfinder:
• **REINHARD, Christoph**
**3400 Burgdorf (CH)**
• **ZENGER, Mathias**
**3400 Burgdorf (CH)**

(74) Vertreter: **Viering, Jentschura & Partner mbB Patent- und Rechtsanwälte**
**Am Brauhaus 8**
**01099 Dresden (DE)**

(56) Entgegenhaltungen:
**DE-A1-102007 038 752    JP-A- H04 881**

EP 3 503 046 B1

**Beschreibung**

Die Erfindung betrifft ein System, welches eine Verarbeitungseinrichtung und eine daran angeschlossene Kamera aufweist, zum Nachweis eines maschinenlesbaren Sicherheitsmerkmals eines Wertdokuments sowie ein Verfahren zum Austausch einer Kamera eines solchen Systems.

Wertdokumente wie Wertscheine oder bspw. Banknoten, Schecks, Aktien, Papiere mit Sicherheitsaufdruck, Urkunden, Ausweise, Reisepässe, Eintrittskarten, Fahrkarten, Gutscheine, Identifikations- oder Zugangskarten oder dergleichen können auf deren Frontseite, deren Rückseite und/oder im Material eingebettet mit Sicherheitsmerkmalen versehen sein, um eine Fälschung davon zu erschweren oder zu verhindern sowie deren Echtheit überprüfen zu können. Im beispielhaften Falle einer Banknote können einige dieser Sicherheitsmerkmale, z.B. ein mit lumineszierender Tinte bedruckter Bereich der Banknote, maschinenprüfbar sein.

Herkömmliche Vorrichtungen zur Handhabung solcher Banknoten, welche bspw. in Bankautomaten zum Ausgeben von Banknoten installiert sind, sind unter anderem mit Systemen ausgestattet, welche die Echtheit der Banknoten anhand der maschinenlesbaren Sicherheitsmerkmale überprüfen, um diese ggf. aus dem Umlauf zu entfernen, wenn eine Banknote als Fälschung identifiziert wird. Hierbei werden die Sicherheitsmerkmale durch Sensoren erfasst, die Signale durch eine Verarbeitungseinrichtung des Systems verarbeitet und ausgewertet. Um eine zuverlässiges Erfassen der Sicherheitsmerkmale sicherzustellen, muss das System bspw. im Hinblick auf die zu überprüfenden Sicherheitsmerkmale kalibriert werden. Da sowohl die Sensoren, bspw. Kameras, wie auch Bauelemente der Verarbeitungseinrichtung, z.B. Analog-Digital-Wandler für die Kameras, Toleranzen aufweisen, führt eine gemeinsame Kalibrierung der Sensoren mit der Verarbeitungseinrichtung zu einer Abhängigkeit der Kalibrierung von Charakteristiken der Sensoren und der Verarbeitungseinrichtung, d.h., diese werden durch die Kalibrierung aufeinander abgestimmt. Für den Fall, dass ein Sensor nach der Kalibrierung durch einen anderen ausgetauscht werden soll, z.B. aufgrund eines Ausfalls des Sensors, muss bei herkömmlichen Systemen das gesamte System ausgetauscht werden, da eine erneute Kalibrierung bei bereits im Bankautomaten verbauten Systemen nicht erfolgen kann.

Folglich liegt bei herkömmlichen Systemen dahingehend ein Problem vor, dass bei einem Ausfall einer Komponente des Systems das gesamte System ausgetauscht werden muss.

Die DE 10 2007 038752 A1 offenbart ein Beispiel für ein Verfahren für die Kalibrierung eines Sensorsystems und die JP H04 881 A offenbart ein Beispiel für eine Fehler-Korrekturvorrichtung für eine zweidimensionale Array-Type-Infrarotvideokamera.

Es werden ein System gemäß Anspruch 1 und ein Verfahren zum Austausch einer Kamera in einem System mit einer Verarbeitungseinrichtung und einer daran angeschlossenen und austauschbaren Kamera zum Nachweis eines maschinenlesbaren Sicherheitsmerkmals eines Wertdokuments gemäß Anspruch 10 bereitgestellt. Weitere Ausführungsbeispiele sind in den abhängigen Ansprüchen beschrieben.

Das System gemäß einem Ausführungsbeispiel weist eine Verarbeitungseinrichtung und zumindest eine daran angeschlossene Kamera (bspw. zwei, drei, vier, fünf, sechs, usw.) auf. Das System kann Teil einer Vorrichtung zur Handhabung von Wertdokumenten sein, welche zum Empfangen von Wertdokumenten, zum Transport der Wertdokumente mittels einer Transportvorrichtung durch die Vorrichtung hindurch, und zum Prüfen und Ausgeben der Wertdokumente eingerichtet sein kann. Das Wertdokument (z.B. eine Banknote) kann ein flacher, bspw. rechteckiger, Gegenstand aus z.B. Papier oder sonstigem Fasermaterial, Kunststoff oder einer Kombination daraus sein und weist zumindest ein maschinenlesbares Sicherheitsmerkmal auf. Das System kann bspw. in einem Bankautomaten bereitgestellt sein. Zudem kann das System ebenfalls in zahlreichen Arten von Automaten bereitgestellt sein, welche Wertdokumente handhaben, z.B. in Einzahlungs-, Fahrkarten-, Lebensmittel- und Getränkeautomaten. Der Aufbau und die Funktion solcher Automaten sind hinreichend bekannt, sodass eine Beschreibung davon nicht erfolgt.

Die Verarbeitungseinrichtung ist z.B. als eine bestückte Leiterplatte (z.B. eine gedruckte Schaltkreisplatine) mit darauf angebrachten (z.B. integrierten) Schaltkreisen, bspw. Mikroprozessoren (z.B. eine zentrale Prozessoreinheit; im Weiteren kurz: CPU), Speichermodulen, Analog-Digital-Wandlern (im weiteren kurz: A/D-Wandler), Schnittstellen zum Anschluss der Kameras und zur Kommunikation mit anderen Komponenten der Handhabungsvorrichtung, etc. bereitgestellt. Beispielsweise kann die Verarbeitungseinrichtung zumindest eine CPU, einen Speicher, einen A/D-Wandler und eine Schnittstelle aufweisen, wobei die CPU die Funktion einer Steuerungseinheit der Verarbeitungseinrichtung wahrnehmen kann. Die einzelnen Komponenten des Systems können durch entsprechende (z.B. elektrische und/oder optische) Leitungen zur Kommunikation und/oder Energieversorgung miteinander verbunden sein.

Die Kamera ist an die Verarbeitungseinrichtung angeschlossen und kann ein Sicherheitsmerkmal des Wertdokuments erfassen, bspw., wenn das Wertdokument an der Kamera vorbeitransportiert wird. Die Kamera ist z.B. eingerichtet, um austauschbar zu sein. Darüber hinaus kann anstatt einer Kamera auch bspw. ein Sensor verwendet werden, welcher ein anderes Erfassungsprinzip verwendet, z.B. ein magnetischer, kapazitiver, induktiver, oder taktiler Sensor.

Das System betrifft mittels Verarbeitungseinrichtungs-Korrekturdaten, welche Charakteristiken der Verarbeitungseinrichtung, und Kamerakalibrierungsdaten kalibriert sein, welche Charakteristiken der Verarbeitungseinrichtung und der daran angeschlossenen Kamera betreffen. Die Kalibrierung kann bspw. dazu dienen, das System auf die nachzuweisenden Sicherheitsmerkmale einzustellen. Die Charakteristiken können bspw. Unterschiede zwischen zu erwartenden Ausgabewerten beim Erfassen eines Normals (z.B. Normalwerten) und tatsächlichen Ausgabewerten, bspw. aufgrund von Toleranzen des Systems, beim Erfassen des Normals betreffen. Ein Normal kann bspw. ein ideal weißer Körper (Weißreferenzkörper) sein, welcher von der Kamera erfasst wird, um deren Ausgabespannung beim Erfassen des Normals mit einer vorbestimmten Ausgabespannung (z.B. gemäß einer Herstellerangabe beim Erfassen des Normals) zu vergleichen und die auftretenden Unterschiede zu ermitteln. Derartige Unterschiede in den Ausgabewerten der Kamera können bspw. aufgrund unterschiedlich Erfassungssensitivitäten auftreten. Analog hierzu können auch Unterschiede bei der Verarbeitung der Ausgabespannung der Kamera in der Verarbeitungseinrichtung z.B. aufgrund von Toleranzen der A/D-Wandler auftreten. Die Verarbeitungseinrichtungs-Korrekturdaten und die Kamerakalibrierungsdaten können bspw. binär und maschinenlesbar vorliegen und können Parameter (z.B. Zustandsinformationen der Kamera bzw. der Verarbeitungseinrichtung wie Hardware- und/oder Softwareversionsinformationen), Werte (z.B. Normalisierungswerte wie Gewichtungswerte, Kalibrierungswerte, etc. und Randbedingungen wie bspw. Referenzspannungen usw.) Einstellungen der Verarbeitungseinrichtung bzw. der Kamera (z.B. eine Transportgeschwindigkeit des Wertdokuments, einen Kameraabstand zum Wertdokument usw.) sowie Anweisungen, Verfahrensschritte, etc. aufweisen.

Die Kamera weist einen Speicher (z.B. ein Speichermodul oder mehrere Speichermodule) auf, welcher eingerichtet ist, die Verarbeitungseinrichtungs-Korrekturdaten und die Kamerakalibrierungsdaten das System betreffend zu speichern, in welchem die Kalibrierung erfolgt. Beispielsweise kann die Kalibrierung unter Verwendung einer Kalibrierungseinrichtung erfolgen, an welcher die Kameras angeschlossen sind und welche eine z.B. ideale (mit geringen Toleranzen behaftete) oder simulierte Verarbeitungseinrichtung aufweist. Folglich können Kameras mehrerer Systeme von einer solchen Kalibrierungseinrichtung kalibrierbar sein, bspw. im Anschluss an die Herstellung der Kameras. Der Speicher kann bspw. eingerichtet sein, um die Verarbeitungseinrichtungs-Korrekturdaten und die Kamerakalibrierungsdaten dauerhaft zu speichern, bspw. so lange, bis sie durch die Kalibrierungseinrichtung geändert werden. Der Speicher kann bspw. extern adressierbar sein, bspw. von der CPU der angeschlossenen Verarbeitungseinrichtung. Im Weiteren ist eine Kamera, welche ihre Kamerakalibrierungsdaten und die Verarbeitungseinrichtungs-Korrekturdaten der Verarbeitungseinrichtung, mittels welcher die Kalibrierung erfolgt ist, in ihrem Speicher trägt, als eine kalibrierte Kamera bezeichnet.

Die Kamera kann weiter z.B. einen Bildsensor (bspw. einen Zeilensensor, einen Kontaktbildsensor, etc.) und ein auf die sensitive Wellenlänge des Bildsensors bzw. auf das Spektrum des zu erfassenden Sicherheitsmerkmals abgestimmtes Beleuchtungsmittel aufweisen, bspw. eine oder mehrere lichtemittierende Diode(n) (im Weiteren kurz: LED; bspw. eine oder mehrere organische LED(s)). Das Beleuchtungsmittel kann das Wertdokument beleuchten, um optische Eigenschaften des Sicherheitsmerkmals zu aktivieren, z.B. eine Fluoreszenz, eine Reflektion, etc., welche vom Bildsensor der Kamera erfassbar ist. Der Bildsensor kann z.B. mehrere Detektorelemente aufweisen, welche für korrespondierende Pixel separate Signale ausgeben. Weiter kann die Kamera mehrere Bildsensoren aufweisen, z.B. um Farben oder Sicherheitsmerkmale in unterschiedlichen Spektralbereichen erfassen zu können.

Die Kamera kann z.B. als ein Kamerapaar mit einer ersten und einer zweiten Kamera ausgebildet sein. Die erste Kamera kann z.B. eingerichtet sein, um Auflicht zu erfassen, welches von der LED emittiert wird und vom Wertdokument reflektiert wird, und die zweite Kamera kann z.B. eingerichtet sein, um Durchlicht zu erfassen, welches von der LED emittiert wird und durch das Wertdokument hindurchtritt. Somit sind z.B. Sicherheitsmerkmale erfassbar, welche im Inneren des Wertdokuments vorliegen.

Die Verarbeitungseinrichtung weist z.B. einen Speicher (z.B. ein Speichermodul oder mehrere Speichermodule) auf, welcher eingerichtet ist, um die Verarbeitungseinrichtungs-Korrekturdaten und die Kamerakalibrierungsdaten das System betreffend zu speichern, in welchem der Betrieb zum Nachweis eines maschinenlesbaren Sicherheitsmerkmals des Wertdokuments erfolgt. Die Verarbeitungseinrichtungs-Korrekturdaten können z.B. durch Anschließen der Verarbeitungseinrichtung an eine Normalisierungseinrichtung erhalten werden, welche z.B. eine ideale (mit geringen Toleranzen behaftete) Kamera simuliert und simulierte Kamerasignale an die Verarbeitungseinrichtung ausgibt, wobei die Verarbeitungseinrichtung basierend auf den (idealen) simulierten Kamerasignalen die Verarbeitungseinrichtungs-Korrekturdaten erstellt und speichert. Der Speicher kann bspw. eingerichtet sein, um die Verarbeitungseinrichtungs-Korrekturdaten dauerhaft und die Kamerakalibrierungsdaten dauerhaft oder nicht-dauerhaft zu speichern. Der Speicher kann bspw. von der CPU der Verarbeitungseinrichtung adressierbar sein. Im Weiteren ist eine Verarbeitungseinrichtung, welche ihre Verarbeitungseinrichtungs-Korrekturdaten in ihrem Speicher trägt, als eine normalisierte Verarbeitungseinrichtung bezeichnet.

Die Verarbeitungseinrichtung (z.B. die CPU) ist weiter eingerichtet, um die in dem Speicher der Verarbeitungseinrichtung zu speichernden Kamerakalibrierungsdaten des Systems zu berechnen, in welchem der Betrieb zum Nachweis des maschinenlesbaren Sicherheitsmerkmals des Wertdokuments erfolgt. Die Kamerakalibrierungsdaten können z.B. bei jedem Start des Systems berechnet werden. Die Berechnung kann durch Gewichten der im Speicher der Kamera gespeicherten Kamerakalibrierungsdaten mit den im Speicher der Kamera gespeicherten Verarbeitungseinrichtungs-Korrekturdaten und mit den im Speicher der Verarbeitungseinrichtung gespeicherten Verarbeitungseinrichtungs-Korrekturdaten erfolgen. Somit sind die Kamerakalibrierungsdaten, welche im System verwendet werden, anhand der Verarbeitungseinrichtungs-Korrekturdaten anpassbar. Dies hat zur Folge, dass die Kamerakalibrierungsdaten auf das gegenwärtige System anpassbar sind, d.h., Kameras, welche in unterschiedlichen Systemen kalibriert werden, sind untereinander austauschbar.

Die Kamerakalibrierungsdaten können z.B. zumindest eine der folgenden Informationen aufweisen, welche im Rahmen der Kalibrierung der Kamera ermittelbar sind: einen Weißreferenzwert der Kamera (z.B. einen Neutralweißwert ohne Farbanteil, z.B. eine entsprechende Ausgabespannung der Kamera beim Erfassen einer Weißreferenz), einen Kamerabeleuchtungswert (z.B. einen Wert eines Stromflusses durch die LED), einen Kamerafarbwert (z.B. einen Farbwert für rot, grün und/oder blau, z.B. eine entsprechende Ausgabespannung der Kamera beim Erfassen einer roten, grünen und blauen Farbe), eine Auflösung der Kamera, einen Abstandswert der Kamera zum Wertdokument und einen Transportgeschwindigkeitswert des Wertdokuments relativ zur Kamera. Beispielsweise werden der Weißreferenzwert, der Kamerabeleuchtungswert und der Kamerafarbwert bei vorbestimmten Abständen und Transportgeschwindigkeiten ermittelt. Die Kamerakalibrierungsdaten können bspw. für ein jedes Pixel der Kamera oder für in Kanälen zusammengefasste Pixel separat ermittelt werden.

Die Verarbeitungseinrichtungs-Korrekturdaten können z.B. Ausgabewerte betreffen, welche von der Verarbeitungseinrichtung in Antwort auf die Eingabe einer der folgenden Spannungen im Rahmen der Normalisierung der Verarbeitungseinrichtung ermittelbar sind: eine Kamera-Referenzspannung, z.B. als Referenzwert zum Vergleich mit Kamera-Ausgabespannungen, eine Kamera-Hellniveauspannung, welche z.B. einen maximalen Helligkeitswert der Kamera repräsentiert, wenn ein heller, z.B. weißer, Bereich eines Wertdokuments erfasst wird, eine Kamera-Dunkelniveauspannung, welche z.B. einen maximalen Dunkelwert der Kamera repräsentiert, wenn ein dunkler, z.B. schwarzer, Bereich eines Wertdokuments erfasst wird, eine Kamera-Hellniveaumittelwertspannung, welche z.B. über einen vorbestimmten Zeitraum aus mehreren Kamera-Hellniveauspannungen gemittelt wird, eine Kamera-Dunkelniveaumittelwertspannung, welche z.B. über einen vorbestimmten Zeitraum aus mehreren Kamera-Dunkelniveauspannungen gemittelt wird, und eine Verstärkungsspannung, z.B. mit welcher die Ausgabespannungen der Kamera durch Verstärker der Verarbeitungseinrichtung verstärkt werden. Die Verarbeitungseinrichtungs-Korrekturdaten können bspw. für ein jedes Pixel der Kamera oder für in Kanälen zusammengefasste Pixel separat ermittelt werden.

Der Speicher der Kamera kann ein nicht-flüchtiger Speicher sein, bspw. ein EEPROM (Electrically Erasable Programmable Read Only Memory - Elektrisch löschbarer programmierbarer Nur-Lese-Speicher). Darüber hinaus können andere Arten von nicht-flüchtigen Speichern verwendet werden, z.B. andere Halbleiterspeicher oder Magnetspeicher oder optische Speicher. Weiter kann der Speicher der Verarbeitungseinrichtung, in welchem die Verarbeitungseinrichtungs-Korrekturdaten gespeichert sind, ein nicht-flüchtiger Speicher in der Art des Speichers der Kamera sein. Darüber hinaus kann der Speicher der Verarbeitungseinrichtung, in welchem die Kamerakalibrierungsdaten gespeichert sind, ein flüchtiger Speicher sein, z.B. ein RAM. Darüber hinaus können andere Arten von flüchtigen Speichern verwendet werden, z.B. andere Halbleiterspeicher oder Magnetspeicher.

Das Wertdokument kann z.B. eines der folgenden sein: eine Banknote, ein Scheck, ein Identitätsnachweis, ein Reisepass, ein Fahrschein und ein Aktiendokument.

Das Verfahren zum Austausch einer Kamera in einem System, welches eine Verarbeitungseinrichtung und eine daran angeschlossene und austauschbare Kamera aufweist, zum Nachweis eines maschinenlesbaren Sicherheitsmerkmals eines Wertdokuments gemäß einem Ausführungsbeispiel kann aufweisen: Austauschen einer ersten Kamera, welche an eine erste Verarbeitungseinrichtung angeschlossen ist, durch eine zweite mittels einer zweiten Verarbeitungseinrichtung kalibrierten Kamera, welche in einem Speicher zweite Kamerakalibrierungsdaten und zweite Verarbeitungseinrichtungs-Korrekturdaten aufweist, Auslesen, durch die erste Verarbeitungseinrichtung (z.B. die CPU), der zweiten Kamerakalibrierungsdaten und der zweiten Verarbeitungseinrichtungs-Korrekturdaten aus dem Speicher der zweiten Kamera, Berechnen, durch die erste Verarbeitungseinrichtung, angepasster Kamerakalibrierungsdaten für das System aus erster Verarbeitungseinrichtung und zweiter Kamera durch Gewichten der zweiten Kamerakalibrierungsdaten mit den zweiten Verarbeitungseinrichtungs-Korrekturdaten und in einem Speicher der ersten Verarbeitungseinrichtung gespeicherten ersten Verarbeitungseinrichtungs-Korrekturdaten, und Anwenden, durch die erste Verarbeitungseinrichtung (z.B. die CPU), der angepassten Kamerakalibrierungsdaten durch Speichern im (z.B. flüchtigen) Speicher der ersten Verarbeitungseinrichtung. Diese Schritte können z.B. als Software im Speicher der Verarbeitungseinrichtung oder einem weiteren Speichermedium der Verarbeitungseinrichtung gespeichert sein und von der CPU ausführbar sein.

Die Verarbeitungseinrichtungs-Korrekturdaten können z.B. durch folgendes Verfahren erhalten werden (z.B. nach der Herstellung und vor dem Einbau des Systems in eine Vorrichtung zur Handhabung von Wertdokumenten oder bei der Reparatur einer solchen Vorrichtung): Anschließen einer Normalisierungseinrichtung, welche z.B. eine kalibrierte Kamera simuliert, an die Verarbeitungseinrichtung, Ausgeben, durch die Normalisierungseinrichtung, eines simulierten (z.B. idealen, d.h., störungsarmen) Kamerasignals, und Ermitteln, durch die Verarbeitungseinrichtung, der Verarbeitungseinrichtungs-Korrekturdaten basierend auf dem simulierten Kamerasignal.

Die Verarbeitungseinrichtung kann z.B. unter Verwendung der Normalisierungseinrichtung normalisiert werden durch Speichern der ermittelten Verarbeitungseinrichtungs-Korrekturdaten im (z.B. nicht-flüchtigen) Speicher der Verarbeitungseinrichtung.

Die Kamerakalibrierungsdaten können bspw. durch folgendes Verfahren erhalten werden (z.B. nach der Herstellung und vor dem Einbau des Systems in eine Vorrichtung zur Handhabung von Wertdokumenten): Anschließen einer zu kalibrierenden Kamera an die normalisierte Verarbeitungseinrichtung, Erfassen, durch die Kamera, eines Kalibrierungsnormals (z.B. eines Weißreferenznormals, eines rotfarbigen, grünfarbigen und blaufarbigen Referenznormals, usw.) und Ausgeben eines entsprechenden Kamerasignals (z.B. eines Spannungssignals) an die Verarbeitungseinrichtung, und Ermitteln, bspw. durch die Verarbeitungseinrichtung oder z.B. einer daran angeschlossenen Kalibrierungseinrichtung, der Kamerakalibrierungsdaten basierend auf dem Kamerasignal, welches in Antwort auf das Kalibrierungsnormal an die Verarbeitungseinrichtung ausgegeben wird. Beispielsweise kann das Verfahren durch die Kalibrierungseinrichtung gesteuert ausgeführt werden, welche mit der Verarbeitungseinrichtung verbunden ist (bspw. mittels einer der Schnittstellen).

Die Kamera kann bspw. unter Verwendung der normalisierten Verarbeitungseinrichtung kalibriert werden durch Speichern der ermittelten Kamerakalibrierungsdaten zusammen mit Verarbeitungseinrichtungs-Korrekturdaten der Verarbeitungseinrichtung im (z.B. nicht-flüchtigen) Speicher der Kamera.

Ausführungsbeispiele der Vorrichtung und des Verfahrens sind in den Figuren dargestellt bzw. werden im Folgenden näher erläutert.

Es zeigen:

Figur 1     einen schematischen Aufbau eines Systems, welches eine Verarbeitungseinrichtung und zwei Kameras aufweist,

Figur 2     Signale einer Kamera und einer Verarbeitungseinrichtung, wobei Figur 2A ein Kamerasignal und Figur 2B ein Digitalumsetzersignal zeigt,

Figur 3     ein Schema zum Erzeugen der Verarbeitungseinrichtungs-Korrekturdaten beim Normalisieren (Korrigieren) der Verarbeitungseinrichtung,

Figur 4     ein Schema zum Erzeugen der Kamerakalibrierungsdaten und zum Verwenden der Verarbeitungseinrichtungs-Korrekturdaten und beim Kalibrieren der Kamera und

Figur 5     ein Schema zum Berechnen angepasster Kamerakalibrierungsdaten beim Austausch einer Kamera.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeführt werden kann. Es versteht sich, dass die Indizierung von Merkmalen mit z.B. "erste(s/r)", "zweite(s/r)", usw. nur der Veranschaulichung dient und auf keinerlei Weise einschränkend ist. Es versteht sich ebenfalls, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert. In den Figuren werden identische oder ähnliche Elemente mit identischen Bezugszeichen versehen, soweit dies zweckmäßig ist.

Im Rahmen dieser Beschreibung werden die Begriffe "verbunden", "angeschlossen" sowie "gekuppelt" verwendet zum Beschreiben sowohl einer direkten als auch einer indirekten Verbindung, eines direkten oder indirekten Anschlusses sowie einer direkten oder indirekten Kupplung.

Beispielsweise können die hier beschriebenen Schaltkreise oder Teile davon bzw. die Mikroprozessoren, z.B. die CPU und/oder der A/D-Wandler, unter Verwendung von zumindest einer der folgenden Komponenten umgesetzt sein: einem anwendungsspezifisch-integrierten Schaltkreis (ASIC), einem digitalen Signalprozessor (DSP), einer digitalen Signalverarbeitungsvorrichtung (DSPD), einer programmierbaren Logikvorrichtung (PLD) und einer anwendungsspezifischprogrammierbaren Gatteranordnung (FPGA). Als Speicher können beispielsweise ein elektrisch-löschbarer und elektrischprogrammierbarer Nur-Lesen-Speicher (EEPROM) und ein Direktzugriffsspeicher (RAM) verwendet werden, wobei auch andere flüchtige und nicht-flüchtige Speicher möglich sind. Weiter können Verfahrensschritte z.B. hard- und/oder softwareimplementiert ausgeführt werden, d.h., können als Anweisungen in der Form eines Softwarecodes vorliegen, z.B. im Speicher der Verarbeitungseinrichtung und/oder in einem Speicher der Vorrichtung zur Handhabung von Wertdokumenten, und können von z.B. den Mikroprozessoren ausgeführt werden. Der wie hierin verwendete Begriff "Kamera" schließt optische Erfassungsvorrichtungen, welche ein Bild erfassen und in elektrische Signale umwandeln, unabhängig von ihrem Aufbau und von ihrem physikalischen Wirkprinzip mit ein, d.h., optoelektronische Bildwandler, welche mit verschiedenen Strahlungsspektren arbeiten. Verwendbare Spektren können z.B. sein: ein sichtbares Spektrum, z.B. in einem Bereich von etwa von 380 nm - 750 nm, ein Infrarotspektrum, bspw. in einem Bereich von in etwa 750 nm - 3000 nm, und ein ultraviolettes Spektrum, z.B. in einem Bereich von in etwa 1 nm - 380 nm.

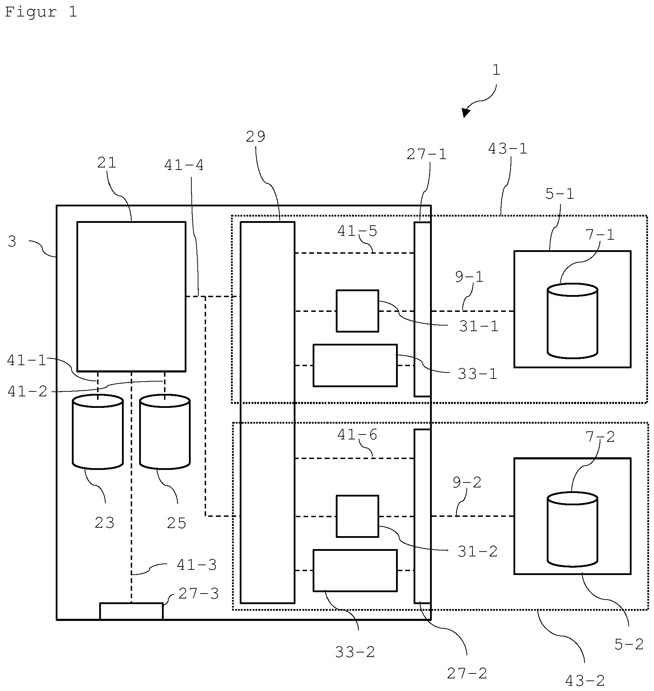

**Fig.1** zeigt schematisch ein System 1 aus einer Verarbeitungseinrichtung 3 mit einer ersten und einer zweiten daran angeschlossenen Kamera 5-1, 5-2. Das System ist z.B. in einer Handhabungsvorrichtung für Banknoten (nicht gezeigt) installiert, welche wiederum z.B. in einem Bankautomaten (nicht gezeigt) installiert ist. Die Kameras 5-1, 5-2 sind eingerichtet, um Banknoten, welche daran vorbeitransportiert werden, zu erfassen und entsprechende Signale an die Verarbeitungseinrichtung 3 auszugeben. Beispielsweise ist die erste Kamera 5-1 als eine Auflichtkamera eingerichtet, welche an der Banknote reflektiertes Licht erfasst. Die zweite Kamera ist als Durchlichtkamera eingerichtet, welche durch die Banknote hindurchtretendes Licht erfasst. Die beiden Kameras 5-1, 5-2 sind im sichtbaren Spektrum sensitiv, wobei die zweite Kamera 5-2 zusätzlich im (z.B. nah-)infraroten Spektrum sensitiv sein kann. Beispielsweise kann die zweite Kamera 5-2 für zwei verschiedene Wellenlängen im Infrarotspektrum sensitiv sein. Die Verarbeitungseinrichtung 3 stellt anhand der Signale fest, z.B. durch Vergleichen mit hinterlegten Erfassungssignalen verschiedener Sicherheitsmerkmale, ob ein Sicherheitsmerkmal der Banknote erfasst wurde oder nicht.

Die Kameras 5-1, 5-2 weisen jeweils zumindest eine LED (nicht gezeigt) zur Bestrahlung (Beleuchtung) der Banknote und einen Bildsensor (nicht gezeigt) zum Erfassen eines Sicherheitsmerkmals der Banknote auf, wobei die LED(s) auf das Spektrum des Bildsensors abgestimmt ist(sind). Der Bildsensor kann z.B. als Zeilensensor für das sichtbare optische Spektrum mit einer festen Anzahl an Detektorelementen ausgeführt sein, welche zu einzelnen Pixel der zu erfassenden Banknote korrespondieren. Die einzelnen Detektorelemente können in Kanälen zusammengefasst sein. Weiter weist die erste Kamera 5-1 einen ersten EEPROM 7-1 als Speicher und die zweite Kamera 5-2 einen zweiten EEPROM 7-2 als Speicher auf und ist die erste Kamera 5-1 mittels einer ersten Leitung 9-1 und die zweite Kamera 5-2 mittels einer zweiten Leitung 9-2 mit der Verarbeitungseinrichtung 3 verbunden. Die Leitungen 9-1, 9-2 dienen der Signalübertragung zwischen der Verarbeitungseinrichtung 3 und den Kameras 5-1, 5-2 und können darüber hinaus die Kameras 5-1, 5-2 mit elektrischer Energie versorgen.

Die Verarbeitungseinrichtung 3 weist eine CPU 21, einen RAM 23 und einen EEPROM 25 als Speicher, eine erste, eine zweite und eine dritte Schnittstelle 27-1, 27-2, 27-3, einen FPGA 29, einen ersten und einen zweiten LED-Treiber 31-1, 31-2 sowie einen ersten und einen zweiten Digitalumsetzer 33-1, 33-2 auf. Der RAM 23 und die CPU 21 sind durch eine erste Leitung 41-1 miteinander verbunden, der EEPROM 25 und die CPU 21 sind durch eine zweite Leitung 41-2 miteinander verbunden und die dritte Schnittstelle 27-1 und die CPU 21 sind durch eine dritte Leitung 41-3 miteinander verbunden. Die CPU 21 ist weiter mit dem FPGA 29 durch eine vierte Leitung 41-4 verbunden. Weiter ist der FPGA 29 mittels einer fünften und einer sechsten Leitung 41-5, 41-6 mit der ersten bzw. der zweiten Schnittstelle 27-1, 27-2 verbunden. Ebenso sind die LED-Treiber 31-1, 31-2 und die Digitalumsetzer 33-1, 33-2 mittels jeweiliger Leitungen mit sowohl dem FPGA 29 als auch der zugehörigen der Schnittstellen 27-1, 27-2 verbunden. Für den Fall, dass die Kameras 5-1, 5-2 mehrere Ausgabekanäle aufweisen, können in analoger Weise weitere Digitalumsetzer und/oder LED-Treiber vorgesehen sein. Weiter ist die Verarbeitungseinrichtung 3 mit einer nicht gezeigten Energieversorgungsvorrichtung bereitgestellt, welche die darauf angebrachten bzw. daran angeschlossenen Komponenten mit elektrischer Energie versorgt.

Die CPU 21 ist die Steuerungseinheit der Verarbeitungseinrichtung 3, welche mit den anderen Komponenten über die Leitungen 41-1 bis 41-6 kommunizieren kann, d.h., Steuerungsbefehle ausgeben und Informationen erhalten kann. Die CPU 21 führt ein Programm (z.B. Software) zum Nachweis von Sicherheitsmerkmalen von Banknoten aus, wofür sie vom FPGA 29 Bilddaten (Bilddatensignale) erhält, die auf den Kamerasignalen (Erfassungssignalen) der Kameras 5-1, 5-2 basieren. Beispielsweise ist die CPU 21 mit anderen Komponenten mittels der Schnittstelle 27-3 verbunden, z.B. an ein Kommunikationssystem angeschlossen (z.B. ein BUS-System), und kann z.B. mit einer zentralen Steuereinheit der Handhabungsvorrichtung und/oder des Bankautomaten Daten austauschen, bspw. übermitteln, dass eine Banknote eine Fälschung ist, wenn kein Sicherheitsmerkmal erfasst wird.

Nachfolgend ist für die erste Kamera 5-1 ein Signalübertragungs- und Signalverarbeitungspfad 43-1 ausgehend von der Kamera 5-1 hin zur CPU 21 beschrieben, wobei dieser analog auch für die zweite Kamera 5-2 gilt (Signalübertragungs- und Signalverarbeitungspfad 43-2). Von der CPU 21 oder dem FPGA 29 gesteuert erzeugt der erste LED-Treiber 31-1 ein Beleuchtungssignal für die LED der ersten Kamera 5-1, sodass die LED die Banknote bestrahlt und die Kamera 5-1 ein Sicherheitsmerkmal bspw. anhand einer Lumineszenz oder einer Reflektion erfassen kann. Die erste Kamera 5-1 erfasst mittels des Bildsensors die Banknote während des Transports an der Kamera 5-1 vorbei und gibt ein entsprechendes analoges Erfassungssignal (z.B. ein Spannungssignal), z.B. für die Farben rot, grün und blau und für eine Helligkeit, an die erste Schnittstelle 27-1 aus, welches dann an den ersten Digitalumsetzer 33-1 weitergegeben wird. Der erste Digitalumsetzer 33-1 weist z.B. einen Verstärker für einen jeden Kanal der Kamera, einen Multiplexer und einen A/D-Wandler auf. Der Digitalumsetzer 33-1 wandelt das analoge Erfassungssignal der Kamera 5-1 in ein digitales Erfassungssignal um. Das digitale Erfassungssignal wird vom FPGA 29 weiter verarbeitet, z.B. gefiltert, und zu einem Bilddatensignal aufbereitet. Dieses Bilddatensignal wird der CPU 21 zur Auswertung weitergeleitet. Die oben beschriebenen Signalübertragungs- und Signalverarbeitungspfade 43-1, 43-2 sind beispielhafter Art und können unter Verwendung anderer Komponenten ausgeführt sein: z.B. können der FPGA 29 und die Digitalumsetzer 33-1, 33-2 sowie die LED-Treiber 31-1, 31-2 in einem Schaltkreis integriert sein, können die Kameras 5-1, 5-2 mehrere Bildsensoren aufweisen und folglich weitere Digitalumsetzer erforderlich sein oder können weitere Komponenten wie z.B. zusätzliche Signalfilter vorhanden sein.

Den Signalübertragungs- und Signalverarbeitungspfaden ist gemein, dass aufgrund von unterschiedlichen Toleranzen der darin verwendeten (z.B. baugleichen) Bauteile die Signale in den Signalübertragungs- und Signalverarbeitungspfaden unterschiedlich verarbeitet werden können; z.B. können zwei baugleiche Kameras aufgrund unterschiedlich sensitiver (z.B. rauschender) Bildsensoren beim Erfassen einer optisch gleichen Referenz unter gleichen Bedingungen voneinander abweichende analoge Erfassungssignale ausgeben und können z.B. die Verstärker der Digitalumsetzer die analogen Erfassungssignale unterschiedlich verstärken, sodass ausgehend von der optischen Referenz voneinander verschiedene digitale Erfassungssignale erzeugt werden. Weiter, da die Signalübertragungs- und Signalverarbeitungspfade Komponenten der Verarbeitungseinrichtung und der Kamera aufweisen, sind darüber übertragene Signale den Charakteristiken von sowohl der Verarbeitungseinrichtung wie auch der Kamera unterworfen. Da es jedoch für das sichere Erfassen eines Sicherheitsmerkmals einer Banknote erforderlich ist, das System auf z.B. die Art der zu erwartenden Sicherheitsmerkmale, die Transportgeschwindigkeit der Banknote, die Art der Kameraanordnung (z.B. Durchlicht/Auflicht, Paarweise) usw. einzustellen, müssen die oben beschriebenen Toleranzen in den Signalübertragungs- und Signalverarbeitungspfaden ausgeglichen werden. Beispielsweise im Fall der Kombination einer Durchlicht- mit einer Auflichtkamera müssen diese beiden aufeinander eingestellt werden. Die Toleranzen werden durch die Kalibrierung der Kameras und durch die Normalisierung der Verarbeitungseinrichtung berücksichtig, wobei entsprechende Verarbeitungseinrichtungs-Korrekturdaten und Kamerakalibrierungsdaten erzeugt werden, anhand welcher die Erfassungssignale korrigiert werden. Folglich sind die Verarbeitungseinrichtungs-Korrekturdaten und die Kamerakalibrierungsdaten von Charakteristiken der Verarbeitungseinrichtung und der Kamera abhängig.

Die Verarbeitungseinrichtungs-Korrekturdaten und Kamerakalibrierungsdaten werden (sind) im ersten und im zweiten EEPROM 7-1, 7-2 der Kameras 5-1, 5-2 gespeichert, und die Verarbeitungseinrichtungs-Korrekturdaten werden (sind) im EEPROM 25 der Verarbeitungseinrichtung 3 gespeichert. Unter Verwendung der Verarbeitungseinrichtungs-Korrekturdaten und der Kamerakalibrierungsdaten ist es der CPU 21 möglich, angepasste Kamerakalibrierungsdaten zu berechnen, um verschiedene Kameras mit verschiedenen Verarbeitungseinrichtungen zu verwenden, d.h., ein Austausch einer Kamera durch eine (z.B. baugleiche) Kamera ist ohne neue Kalibrierung/Normalisierung möglich.

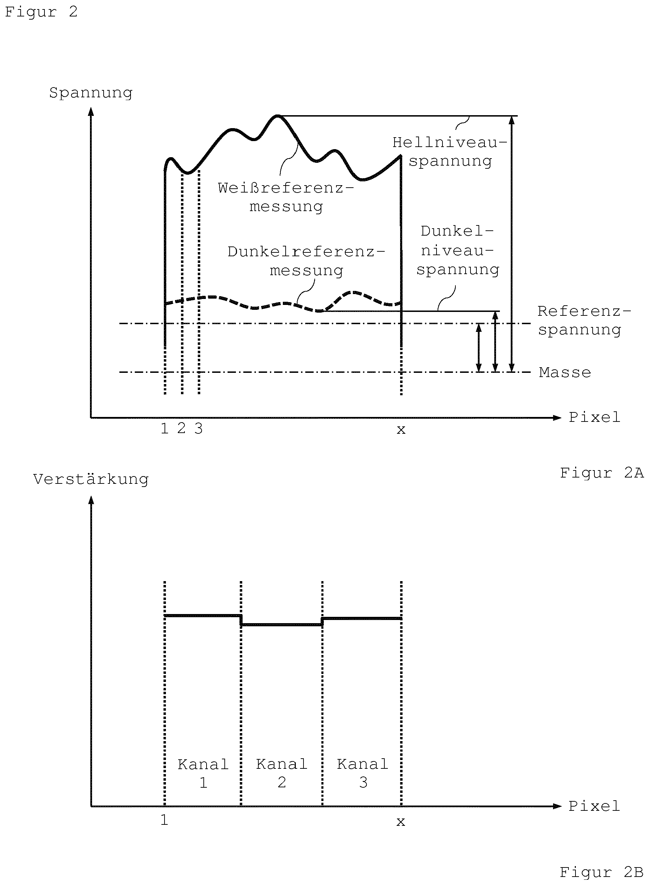

Unter Bezugnahme auf **Fig.2** sind Charakteristiken der Kamera und der Verarbeitungseinrichtung sowie deren Einfluss auf das Normalisieren (Korrigieren) der Verarbeitungseinrichtung und das Kalibrieren der Kamera beschreiben. Fig.2 zeigt Signale einer Kamera und einer Verarbeitungseinrichtung, wobei Fig.2A ein Kamerasignal und Fig.2B ein Digitalumsetzersignal zeigt.

**Fig.2A** zeigt ein Kamerasignal, d.h., ein analoges Erfassungssignal, welches von der Kamera beim Durchführen einer Hellmessung und einer Dunkelmessung ausgegeben wird. Die einzelnen Detektorelemente (Pixel) geben in Abhängigkeit des erfassten Normals jeweils ein Spannungssignal aus, welche aufgrund unterschiedlicher Sensitivität der Pixel unterschiedlich sein können. Beispielsweise entspricht die Hellniveauspannung der Kamera dem Spannungssignal eines idealen Pixels beim Erfassen einer Weißreferenz (bspw. eines Weißreferenzkörpers) und entspricht die Dunkelniveauspannung der Kamera dem Spannungssignal eines (z.B. anderen) idealen Pixels beim Erfassen einer Dunkelreferenz (z.B. eines Dunkelreferenzkörpers).

Die Unterschiede der einzelnen Pixel sind in den Kamerakalibrierungsdaten der Kamera repräsentiert, um die Spannungssignale der einzelnen Pixel bzw. der Kanäle aneinander anzupassen. Beispielsweise werden die Ausgabespannungen der Pixel, welche die ideale Hellniveauspannung nicht erreichen, mit einem Kalibrierungsfaktor abhängig vom Verhältnis zur Hellniveauspannung angepasst. Für einen erfassten Weißreferenzkörper können somit für alle Pixel/Kanäle die gleichen Spannungssignale erhalten werden. Die Kamerakalibrierungsdaten können z.B. einen Weißreferenz- und Dunkelreferenzwert eines Pixels bezogen auf einen Beleuchtungswert (z.B. durch die LED) und einen Farbwert (z.B. für rot, grün und blau) angeben. Weiter können in den Kamerakalibrierungsdaten auch Randbedingungen wie ein Abstandswert der Kamera zum Wertdokument und ein Transportgeschwindigkeitswert des Wertdokuments relativ zur Kamera berücksichtigt sein. Auf diese Art sind die einzelnen Pixel/Kanäle der Kamera aneinander anpassbar.

**Fig.2B** zeigt ein Verstärkungssignal eines Digitalumsetzers der Verarbeitungseinrichtung für beispielhaft drei Kanäle einer Kamera. Das heißt, es werden beispielsweise die Pixel 1 bis 100 in einem Kanal des Digitalumsetzers verarbeitet, d.h. verstärkt und in ein digitales Erfassungssignal umgewandelt. Es ist ersichtlich, dass die Kanäle, d.h., die Gruppierung einzelner Pixel, im Digitalumsetzer unterschiedlich verstärkt werden. Somit ist die für einen Pixel ausgegebene Bildinformation von sowohl den Charakteristiken des Pixels als auch des Digitalumsetzers abhängig. Die Verarbeitungseinrichtungs-Korrekturdaten können Korrekturfaktoren (Normalisierungsfaktoren) repräsentieren, welche die in den Kanälen des Digitalumsetzers unterschiedliche Verarbeitung der analogen in digitale Erfassungssignale berücksichtigen; die analogen Erfassungssignale können z.B. die folgenden Spannungen sein: eine Kamera-Referenzspannung, welche z.B. als Referenz zur Hell-/Dunkel-/Farb-Bestimmung dient, eine Kamera-Hellniveauspannung, welche z.B. einen maximalen Helligkeitswert der Kamera repräsentiert, eine Kamera-Dunkelniveauspannung, welche z.B. einen maximalen Dunkelwert der Kamera repräsentiert, eine Kamera-Hellniveaumittelwertspannung, welche z.B. eine zeitliche und/oder über alle Pixel des Bildsensors gemittelte Spannung repräsentiert, eine Kamera-Dunkelniveaumittelwertspannung, welche z.B. eine zeitliche und/oder über alle Pixel des Bildsensors gemittelte Spannung repräsentiert, und eine Verstärkungsspannung, welche z.B. die Signalverstärkung durch den Verstärker des Digitalumsetzers repräsentiert. Auf diese Art sind die Digitalumsetzer der Verarbeitungseinrichtung und die Kamera aneinander anpassbar.

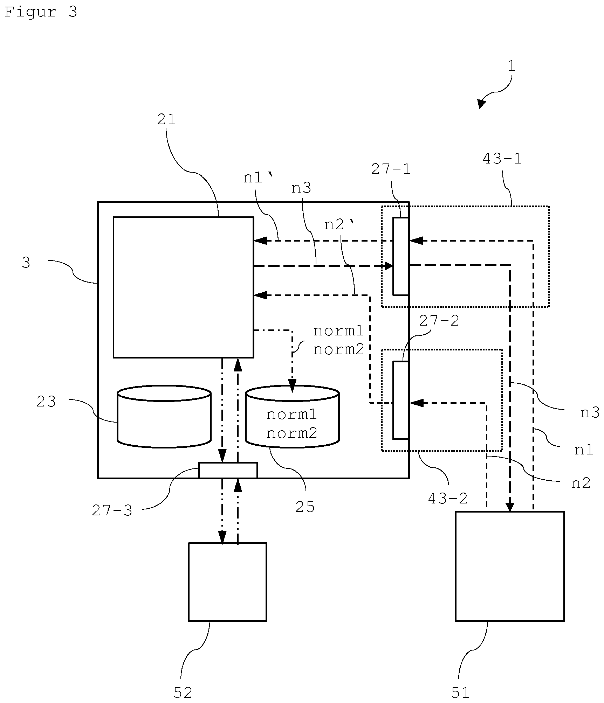

Unter Bezugnahme auf die Fig.3 bis Fig.5 sind im Weiteren Vorgänge und Verfahren des Erzeugens der Verarbeitungseinrichtungs-Korrekturdaten, der Kamerakalibrierungsdaten, der angepassten Kamerakalibrierungsdaten sowie der Kameratausch beschrieben. In den Fig.3 bis Fig.5 sind die Leitungen 41-1 bis 41-6 sowie 9-1 und 9-2 und die Komponenten FPGA 29, LED-Treiber 31-1, 31-2 und Digitalumsetzer 33-1, 33-2 der Signalübertragungs- und Signalverarbeitungspfade 43-1, 43-2 zwecks besserer Darstellbarkeit nicht gezeigt; stattdessen sind Signalübertragungsvorgänge gezeigt.

**Fig.3** zeigt ein Schema zum Erzeugen der Verarbeitungseinrichtungs-Korrekturdaten beim Normalisieren (Korrigieren) der Verarbeitungseinrichtung.

Zum Normalisieren der Verarbeitungseinrichtung 3 wird eine Normalisierungseinrichtung 51, welche eine kalibrierte Kamera simuliert, mittels der Schnittstellen 27-1 und 27-2 an die Verarbeitungseinrichtung 3 angeschlossen. Weiter wird eine Steuereinrichtung 52, welche den Normalisierungsvorgang initiiert und als Nutzerschnittstelle dient, mittels der Schnittstelle 27-3 an die Verarbeitungseinrichtung 3 angeschlossen. Alternativ können die Normalisierungseinrichtung 51 und die Steuereinrichtung 52 als eine einzelne Einrichtung ausgeführt sein, welche die nachfolgend beschriebenen Funktionen miteinander kombiniert. Weiter alternativ kann die Steuereinrichtung 52 weggelassen werden, wenn die Verarbeitungseinrichtung 3 selbst über die nachfolgend beschriebene Funktionalität der Steuereinrichtung 52 verfügt.

Die Steuereinrichtung 52 ist vorgesehen und eingerichtet, um dem Nutzer (der Person, welche die Normalisierung ausführt) die Möglichkeit zu geben, den Normalisierungsvorgang zu starten, zu überwachen und zu beenden (bspw. einzelne Schritte davon auszulösen und den Fortschritt des Normalisierungsvorgangs zu verfolgen). Hierzu kommunizieren die CPU 21 und die Steuereinrichtung 52 mittels der Schnittstelle 27-3 miteinander. Die Steuereinrichtung 52 kann z.B. ein gewöhnlicher PC, bspw. ein Laptop, sein.

Die Normalisierungseinrichtung 51 kann bspw. ein Testeinrichtung in der Serienfertigung der Verarbeitungseinrichtung 3 oder eine mobile Einrichtung sein, welche z.B. zu einem Geldautomaten zur Reparatur transportierbar ist. Die Normalisierungseinrichtung 51 gibt an die erste und die zweite Schnittstelle 27-1, 27-2 jeweils ein erstes und ein zweites simuliertes Kamerasignal n1, n2 aus (z.B. ein Spannungssignal), welche den analogen Erfassungssignalen der Kameras 5-1, 5-2 entsprechen. Diese simulierten Kamerasignale n1, n2 können für beide Schnittstellen 27-1, 27-2 gleich sein und dienen als Normal für die Verarbeitungseinrichtung 3; bspw. sind sie besonders rauscharm und stabil. Das simulierte Kamerasignal n1, n2 wird für eine vorbestimmte Zeitdauer und mit vorbestimmten Werten ausgegeben; bspw. werden die in der Fig.2A gezeigte Hellniveauspannung, Dunkelniveauspannung und Referenzspannung ausgegeben. Durch die Übertragung und Verarbeitung im jeweiligen Signalübertragungs- und Signalverarbeitungspfad 43-1, 43-2 entsteht ein vom ersten und vom zweiten simulierten Kamerasignal n1, n2 abweichendes erstes und zweites (z.B. digitales) Bilddatensignal n1', n2', welche an die CPU 21 übertragen werden. Das Ausgeben der simulierten Kamerasignale n1, n2 wird von der CPU 21 gesteuert, welche mittels einem Steuersignal n3 entsprechende Befehle an die Normalisierungseinrichtung 51 ausgibt, um z.B. vorbestimmte Pegel, Abfolgen, etc. der simulierten Kamerasignale n1, n2 auszulösen. Ebenfalls kann die Normalisierungseinrichtung 51 von der Verarbeitungseinrichtung 3 mit Energie versorgt werden. Im Beispiel der Fig.3 ist eine Normalisierungseinrichtung 51 gezeigt, welche mit beiden Schnittstellen 27-1 und 27-2 kommuniziert, jedoch kann für jede der Schnittstellen 27-1 und 27-2 eine separate Normalisierungseinrichtung 51 verwendet werden. Ebenfalls kann das Steuersignal n3 über jede der Schnittstellen 27-1 und 27-2 ausgegeben werden.

In Antwort auf die simulierten Kamerasignale n1, n2 berechnet die CPU 21 die Verarbeitungseinrichtungs-Korrekturdaten für die Verarbeitungseinrichtung 3, welche z.B. Informationen über Unterschiede, welche aus dem Bilddatensignal ermittelbar sind, der einzelnen Pixel bei der Weißreferenz- und Dunkelreferenzmessung aufweisen. Die Verarbeitungseinrichtungs-Korrekturdaten werden für beide Signalübertragungs- und Signalverarbeitungspfade 43-1, 43-2 separat berechnet, d.h., es werden erste Verarbeitungseinrichtungs-Korrekturdaten norm1 für den ersten Signalübertragungs- und Signalverarbeitungspfad 43-1 und zweite Verarbeitungseinrichtungs-Korrekturdaten norm2 für den zweiten Signalübertragungs- und Signalverarbeitungspfad 43-2 berechnet. Anschließend werden die Verarbeitungseinrichtungs-Korrekturdaten norm1, norm2 durch die CPU 21 im EEPROM 25 gespeichert. In den Verarbeitungseinrichtungs-Korrekturdaten norm1, norm2 sind die Unterschiede (Charakteristiken der Verarbeitungseinrichtung 3) bei der Verarbeitung der simulierten Kamerasignale n1, n2 berücksichtig und werden im Betrieb des Systems 1 zur Korrektur der Signale der Kameras 5-1, 5-2 verwendet.

Durch das Speichern der Verarbeitungseinrichtungs-Korrekturdaten norm1, norm2 im EEPROM 25 ist die Verarbeitungseinrichtung 3 normalisiert.

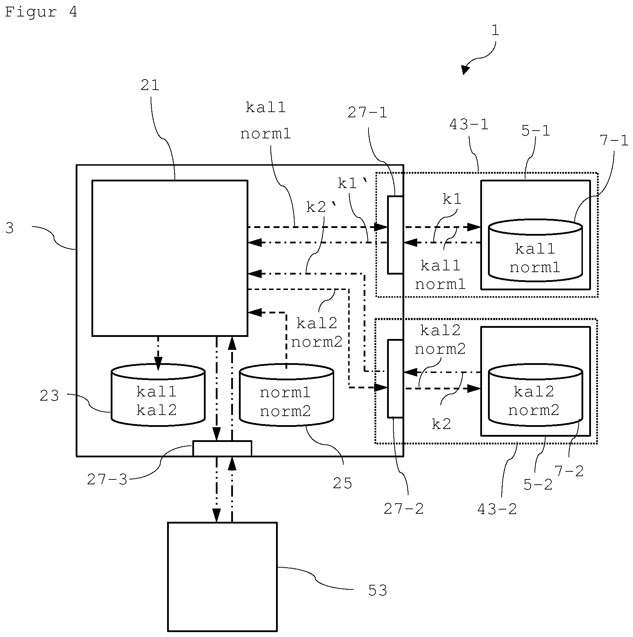

**Fig.4** zeigt ein Schema zum Erzeugen der Kamerakalibrierungsdaten und zum Verwenden der Verarbeitungseinrichtungs-Korrekturdaten beim Kalibrieren einer Kamera.

Zum Kalibrieren der Kameras 5-1, 5-2 werden diese an die erste bzw. an die zweite Schnittstelle 27-1, 27-2 einer normalisierten Verarbeitungseinrichtung 3 angeschlossen. Anschließend erfassen die Kameras 5-1, 5-2, bspw. in aufeinander folgenden Kalibrierungsschritten, ein Kalibrierungsnormal, z.B. für Hell-, Dunkel- und Farbwerte, und geben ein erstes und zweites analoges Erfassungssignal k1, k2 (z.B. ein Spannungssignal) an die Schnittstellen 27-1, 27-2 aus. Das Erfassen des Kalibrierungsnormals kann bspw. durch eine Kalibrierungseinrichtung 53 gesteuert erfolgen, welche hierzu an die dritte Schnittstelle 27-3 angeschlossen ist, d.h., die Kalibrierungseinrichtung 53 kann mit der CPU 21 kommunizieren, um die Abfolge der einzelnen Kalibrierungsschritte zu steuern. Durch die Übertragung und Verarbeitung im jeweiligen Signalübertragungs- und Signalverarbeitungspfad 43-1, 43-2 entsteht ein vom analogen Erfassungssignal k1, k2 abweichendes erstes und zweites (z.B. digitales) Bilddatensignal k1', k2', welche an die CPU 21 übertragen werden. Zusätzlich kann die Kalibrierungseinrichtung 53 Informationen bezüglich eines Kameraabstands zur Banknote, einer Transportgeschwindigkeit der Banknote, einer Bildauflösung der Kamera usw. an die CPU 21 übertragen. Aus den Bilddatensignalen k1', k2' und ggf. den zusätzlichen von der Kalibrierungseinrichtung 53 übertragenen Informationen berechnet die CPU 21 für die beiden Signalübertragungs- und Signalverarbeitungspfade 43-1, 43-2 jeweilige erste und zweite Kamerakalibrierungsdaten kal1, kal2 und überträgt diese zusammen mit ihren eigenen Verarbeitungseinrichtungs-Korrekturdaten norm1, norm2 an die Kameras 5-1, 5-2 zum Speichern in deren EEPROMs 7-1, 7-2. Alternativ können die Kamerakalibrierungsdaten kal1, kal2 von der Kalibrierungseinrichtung 53 berechnet werden und an die CPU 21 übertragen werden. Beispielsweise können die ersten und die zweiten Kamerakalibrierungsdaten kal1, kal2 auch im RAM 23 der Verarbeitungseinrichtung 3 oder einem anderen (nicht gezeigten) Speichersystem der Verarbeitungseinrichtung 3 gespeichert werden. Das heißt, Die Verarbeitungseinrichtungs-Korrekturdaten werden für beide Signalübertragungs- und Signalverarbeitungspfade 43-1, 43-2 separat berechnet, d.h., es werden erste Kamerakalibrierungsdaten kal1 für den ersten Signalübertragungs- und Signalverarbeitungspfad 43-1 und zweite Kamerakalibrierungsdaten kal2 für den zweiten Signalübertragungs- und Signalverarbeitungspfad 43-2 berechnet. In den Kamerakalibrierungsdaten kal1, kal2 sind die Unterschiede (Charakteristiken der Verarbeitungseinrichtung 3, vgl. das beispielhafte Digitalumsetzersignal der Fig.2B) und der jeweiligen Kamera 5-1, 5-2 (vgl. das beispielhafte Erfassungssignal der Fig.2A) bei der Verarbeitung der Erfassungssignale k1, k2 berücksichtig und werden im Betrieb des Systems 1 zur Korrektur der Erfassungssignale der Kameras 5-1, 5-2 verwendet. Durch das Speichern der Kamerakalibrierungsdaten kal1, kal2 und der Verarbeitungseinrichtungs-Korrekturdaten norm1, norm2 in den EEPROMs 7-1, 7-2 sind die Kameras 5-1, 5-2 kalibriert.

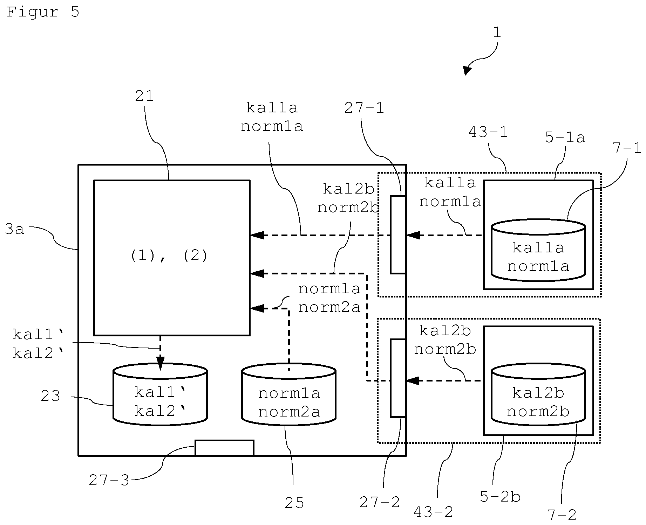

**Fig.5** zeigt ein Schema zum Berechnen angepasster Kamerakalibrierungsdaten beim Austausch einer Kamera.

In Fig.5 ist ein Zustand gezeigt, in welchem eine zweite Kamera 5-2b (z.B. eine Ersatzkamera), welche mit einer zweiten Verarbeitungseinrichtung 3b kalibriert wurde, an eine erste Verarbeitungseinrichtung 3a an der zweiten Schnittstelle 27-2 der ersten Verarbeitungseinrichtung 3a angeschlossen ist. An der ersten Schnittstelle 27-1 der ersten Verarbeitungseinrichtung 3a ist eine erste Kamera 5-1a angeschlossen, welche zusammen mit der ersten Verarbeitungseinrichtung 3a kalibriert wurde. Folglich sind, z.B. im Rahmen eines Austauschs einer defekten Kamera, zwei Kameras 5-2b, 5-1a an die erste Verarbeitungseinrichtung 3a angeschlossen. Ansonsten sind die Verarbeitungseinrichtung 3a sowie die Kameras 5-1a, 5-2b wie oben beschrieben. Entsprechend den obigen Ausführungen trägt die erste Kamera 5-1a erste Verarbeitungseinrichtungs-Korrekturdaten norm1a der ersten Verarbeitungseinrichtung 3a sowie erste Kamerakalibrierungsdaten kalla der Kalibrierung an der ersten Verarbeitungseinrichtung 3a in ihrem EEPROM 7-1. Analog hierzu trägt die Kamera 5-2b zweite Verarbeitungseinrichtungs-Korrekturdaten norm2b der zweiten Verarbeitungseinrichtung 3b sowie zweite Kamerakalibrierungsdaten kal2b der Kalibrierung an der zweiten Verarbeitungseinrichtung 3b in ihrem EEPROM 7-2.

In dieser Konstellation, da die zweite Kamera 5-2b unter Verwendung der Charakteristiken der zweiten Verarbeitungseinrichtung 3b kalibriert wurde, beinhalten die zweiten Kamerakalibrierungsdaten kal2b auch die Charakteristiken der zweiten Verarbeitungseinrichtung 3b, welche von den Charakteristiken der ersten Verarbeitungseinrichtung 3a verscheiden sein können. Hierdurch kann es sein, dass ein sicheres Erfassen eines Sicherheitsmerkmals einer Banknote nicht ausführbar ist. Folglich müssen angepasste erste und zweite Kamerakalibrierungsdaten kal1', kal2' für die erste und die zweite Kamera 5-1a, 5-2b bzw. für den ersten und den zweiten Signalübertragungs- und Signalverarbeitungspfad 43-1, 43-2 von der ersten Verarbeitungseinrichtung 3a berechnet und anschließend verwendet werden, um die Charakteristiken der ersten Verarbeitungseinrichtung 3a zu berücksichtigen.

Zum Berechnen der angepassten Kamerakalibrierungsdaten kal1', kal2' liest die CPU 21 der ersten Verarbeitungseinrichtung 3a die ersten Verarbeitungseinrichtungs-Korrekturdaten norm1a und die ersten Kamerakalibrierungsdaten kalla aus dem EEPROM 7-1 der ersten Kamera 5-1a, die zweiten Verarbeitungseinrichtungs-Korrekturdaten norm2b und die zweiten Kamerakalibrierungsdaten kal2b aus dem EEPROM 7-2 der zweiten Kamera 5-2b sowie die ersten und die zweiten Verarbeitungseinrichtungs-Korrekturdaten norm1a, norm2a aus dem EEPROM 25 der ersten Verarbeitungseinrichtung 3a aus. Anschließend werden die angepassten Kamerakalibrierungsdaten kal1', kal2' wie folgt berechnet:

$$(1) \qquad kal1' = \frac{norm1a}{norm1a} kal1a$$

$$(2) \qquad kal2' = \frac{norm2b}{norm2a} kal2b$$

Folglich ergibt sich für den Fall, dass die zweiten Verarbeitungseinrichtungs-Korrekturdaten norm2b der zweiten Kamera 5-2b von den zweiten Verarbeitungseinrichtungs-Korrekturdaten norm2a der ersten Verarbeitungseinrichtung 3a verschieden sind, eine Gewichtung der zweiten Kamerakalibrierungsdaten kal2b, d.h., in den angepassten zweiten Kamerakalibrierungsdaten kal2' sind die Charakteristiken der ersten Verarbeitungseinrichtung 3a berücksichtigt und sind die Charakteristiken der zweiten Verarbeitungseinrichtung 3b, an welcher die zweite Kamera 5-2b kalibriert wurde, herausgerechnet. Für die angepassten ersten Kamerakalibrierungsdaten kal1' ergibt sich, da aufgrund der Kalibrierung der ersten Kamera 5-1a an der ersten Verarbeitungseinrichtung 3a die ersten Verarbeitungseinrichtungs-Korrekturdaten norm1a der ersten Kamera 5-1a und der ersten Verarbeitungseinrichtung 3a gleich sind, kein Unterschied zu den ersten Kamerakalibrierungsdaten kal1a. Im Anschluss an das Berechnen speichert die CPU 21 die angepassten Kamerakalibrierungsdaten kal1', kal2' im RAM 23 der ersten Verarbeitungseinrichtung 3a zur weiteren Verwendung. Da der RAM 23 ein flüchtiger Speicher ist, erfolgt die Berechnung der angepassten Kamerakalibrierungsdaten kal1', kal2', sobald diese im RAM 23 nicht mehr vorliegen, bspw. bei einem Systemneustart.

**Patentansprüche**

1. System (1), aufweisend:

   • eine Verarbeitungseinrichtung (3; 3a, 3b); und
   • eine daran angeschlossene und austauschbare Kamera (5-1, 5-2; 5-1a, 5-2b) zum Nachweis eines maschinenlesbaren Sicherheitsmerkmals eines Wertdokuments;
   • wobei das System (1) mittels Verarbeitungseinrichtungs-Korrekturdaten (norm1, norm2; norm1a, norm1b, norm2a, norm2b), welche Charakteristiken der Verarbeitungseinrichtung (3; 3a, 3b) betreffen, und Kamerakalibrierungsdaten (kal1, kal2; kal1a, kal2b) kalibriert ist, welche Charakteristiken der Verarbeitungseinrichtung (3; 3a, 3b) und der daran angeschlossenen Kamera (5-1, 5-2; 5-1a, 5-2b) betreffen,
   • wobei die Kamera (5-1, 5-2; 5-1a, 5-2b) einen Speicher (7-1, 7-2) aufweist, der eingerichtet ist, die Verarbeitungseinrichtungs-Korrekturdaten (norm1, norm2; norm1a, norm1b, norm2a, norm2b) und die Kamerakalibrierungsdaten (kal1, kal2; kalla, kal2b) das System (1) betreffend zu speichern, in welchem die Kalibrierung erfolgt; und
   • wobei die Verarbeitungseinrichtung (3; 3a, 3b) einen Speicher (23, 25) aufweist, der eingerichtet ist, die Verarbeitungseinrichtungs-Korrekturdaten (norm1, norm2; norm1a, norm1b, norm2a, norm2b) und die Kamerakalibrierungsdaten (kal1, kal2; kalla, kal2b) das System (1) betreffend zu speichern, in welchem der Betrieb zum Nachweis eines maschinenlesbaren Sicherheitsmerkmals des Wertdokuments erfolgt,

   wobei die Verarbeitungseinrichtung (3; 3a, 3b) eingerichtet ist, die in dem Speicher (23) der Verarbeitungseinrichtung (3; 3a, 3b) zu speichernden Kamerakalibrierungsdaten (kal1, kal2; kalla, kal2b) des Systems (1) zu berechnen, in welchem der Betrieb zum Nachweis eines maschinenlesbaren Sicherheitsmerkmals des Wertdokuments erfolgt, durch Gewichten der im Speicher (7-1, 7-2) der Kamera (5-1, 5-2; 5-1a, 5-2b) gespeicherten Kamerakalibrierungsdaten (kal1, kal2; kalla, kal2b) mit den im Speicher (7-1, 7-2) der Kamera (5-1, 5-2; 5-1a, 5-2b) gespeicherten Verarbeitungseinrichtungs-Korrekturdaten (norm1, norm2; norm1a, norm1b, norm2a, norm2b) und mit den im Speicher (25) der Verarbeitungseinrichtung (3; 3a, 3b) gespeicherten Verarbeitungseinrichtungs-Korrekturdaten (norm1, norm2; norm1a, norm1b, norm2a, norm2b).

2. System (1) gemäß Anspruch 1,
   wobei die Kamera (5-1, 5-2; 5-1a, 5-2b) einen Bildsensor, bevorzugt einen Kontaktbildsensor, und ein Beleuchtungsmittel aufweist.

3. System (1) gemäß Anspruch 2,
   wobei das Beleuchtungsmittel eine LED ist, welche Strahlung in einem Spektrum emittiert, das auf das Spektrum des Bildsensors abgestimmt ist.

**4.** System (1) gemäß Anspruch 3,
wobei die Kamera (5-1, 5-2; 5-1a, 5-2b) als ein Kamerapaar mit einer ersten und einer zweiten Kamera (5-1) ausgebildet ist und wobei die erste Kamera (5-1) eingerichtet ist, Auflicht zu erfassen, welches von der LED emittiert wird und vom Wertdokument reflektiert wird, und die zweite Kamera (5-2) eingerichtet ist, Durchlicht zu erfassen, welches von der LED emittiert wird und durch das Wertdokument hindurchtritt.

**5.** System (1) gemäß einem der vorhergehenden Ansprüche, wobei die Kamerakalibrierungsdaten (kal1, kal2; kalla, kal2b) zumindest eine der folgenden Informationen aufweisen:

- einen Weißreferenzwert der Kamera;
- einen Kamerabeleuchtungswert;
- einen Kamerafarbwert;
- einen Abstandswert der Kamera zum Wertdokument;
- einen Transportgeschwindigkeitswert des Wertdokuments relativ zur Kamera.

**6.** System (1) gemäß einem der vorhergehenden Ansprüche, wobei die Verarbeitungseinrichtungs-Korrekturdaten (norm1, norm2; norm1a, norm1b, norm2a, norm2b) zumindest eine der folgenden Informationen aufweisen:

- eine Kamera-Referenzspannung;
- eine Kamera-Hellniveauspannung;
- eine Kamera-Dunkelniveauspannung;
- eine Kamera-Hellniveaumittelwertspannung;
- eine Kamera-Dunkelniveaumittelwertspannung;
- eine Verstärkungsspannung.

**7.** System (1) gemäß einem der vorhergehenden Ansprüche, wobei der Speicher (7-1, 7-2) der Kamera (5-1, 5-2; 5-1a, 5-2b) ein nicht-flüchtiger Speicher ist, bevorzugt ein EEPROM.

**8.** System (1) gemäß einem der vorhergehenden Ansprüche, wobei der Speicher (23, 25) der Verarbeitungseinrichtung (3; 3a, 3b) einen nicht-flüchtigen Speicher (25), bevorzugt einen EEPROM, in welchem die Verarbeitungseinrichtungs-Korrekturdaten (norm1, norm2; norm1a, norm1b, norm2a, norm2b) gespeichert sind, und einen flüchtigen Speicher (23) aufweist, bevorzugt einen RAM, in welchem die Kamerakalibrierungsdaten (kal1, kal2; kalla, kal2b) gespeichert sind.

**9.** System (1) gemäß einem der vorhergehenden Ansprüche, wobei das Wertdokument eines der folgenden ist:

- eine Banknote;
- ein Scheck;
- ein Identitätsnachweis;
- ein Reisepass;
- ein Fahrschein;
- ein Aktiendokument.

**10.** Verfahren zum Austausch einer Kamera (5-1a, 5-2b) in einem System (1) gemäß Anspruch 1-9 mit einer Verarbeitungseinrichtung (3b) und einer daran angeschlossenen und austauschbaren Kamera (5-1a, 5-1b) zum Nachweis eines maschinenlesbaren Sicherheitsmerkmals eines Wertdokuments, wobei das Verfahren aufweist:

- Austausch einer ersten Kamera, welche an eine erste Verarbeitungseinrichtung (3a) angeschlossen ist, durch eine zweite mittels einer zweiten Verarbeitungseinrichtung kalibrierten Kamera (5-2b), welche in einem Speicher (7-2) zweite Kamerakalibrierungsdaten (kal2b) und zweite Verarbeitungseinrichtungs-Korrekturdaten (norm2b) aufweist,
- Auslesen, durch die erste Verarbeitungseinrichtung (3a), der zweiten Kamerakalibrierungsdaten (kal2b) und der zweiten Verarbeitungseinrichtungs-Korrekturdaten (norm2b) aus dem Speicher (7-2) der zweiten Kamera (5-2b),
- Berechnen, durch die erste Verarbeitungseinrichtung (3a), angepasster Kamerakalibrierungsdaten (kal2') für das System (1) aus erster Verarbeitungseinrichtung (3a) und zweiter Kamera (5-2b) durch Gewichten der zweiten Kamerakalibrierungsdaten (kal2b) mit den zweiten Verarbeitungseinrichtungs-Korrekturdaten (norm2b) und in einem Speicher (25) der ersten Verarbeitungseinrichtung (3a) gespeicherten ersten Verarbeitungseinrichtungs-Korrekturdaten (norm2a), und
• Anwenden, durch die erste Verarbeitungseinrichtung (3a), der angepassten Kamerakalibrierungsdaten (kal2b) durch Speichern im Speicher (23, 25) der ersten Verarbeitungseinrichtung (3a).

**11.** Verfahren gemäß Anspruch 10,
wobei die Verarbeitungseinrichtungs-Korrekturdaten (norm1, norm2; norm1a, norm1b, norm2a, norm2b) erhalten werden durch:

• Anschließen einer Normalisierungseinrichtung (51), welche eine kalibrierte Kamera simuliert, an die Verarbeitungseinrichtung (3; 3a, 3b),
• Ausgeben, durch die Normalisierungseinrichtung (51), eines simulierten Kamerasignals (n1, n2), und
• Ermitteln, durch die Verarbeitungseinrichtung (3; 3a, 3b), der Verarbeitungseinrichtungs-Korrekturdaten (norm1, norm2; norm1a, norm1b, norm2a, norm2b) basierend auf dem simulierten Kamerasignal (n1, n2).

**12.** Verfahren gemäß Anspruch 11,
wobei die Verarbeitungseinrichtung (3; 3a, 3b) unter Verwendung der Normalisierungseinrichtung (51) normalisiert wird durch Speichern der ermittelten Verarbeitungseinrichtungs-Korrekturdaten (norm1, norm2; norm1a, norm1b, norm2a, norm2b) im Speicher (25) der Verarbeitungseinrichtung (3; 3a, 3b).

**13.** Verfahren gemäß Anspruch 12,
wobei die Kamerakalibrierungsdaten (kal1, kal2; kalla, kal1b, kal2a, kal2b) erhalten werden durch:

• Anschließen einer zu kalibrierenden Kamera (5-1, 5-2; 5-1a, 5-2b) an die normalisierte Verarbeitungseinrichtung (3; 3a, 3b),
• Erfassen, durch die Kamera (5-1, 5-2; 5-1a, 5-2b), eines Kalibrierungsnormals und Ausgeben eines entsprechenden Kamerasignals (k1, k2) an die Verarbeitungseinrichtung (3; 3a, 3b), und
• Ermitteln der Kamerakalibrierungsdaten (kal1, kal2; kalla, kal1b, kal2a, kal2b) basierend auf dem Kamerasignal (k1, k2), welches in Antwort auf das Kalibrierungsnormal an die Verarbeitungseinrichtung (3; 3a, 3b) ausgegeben wird.

**14.** Verfahren gemäß Anspruch 13,
wobei die Kamera (5-1, 5-2; 5-1a, 5-2b) unter Verwendung der normalisierten Verarbeitungseinrichtung (3; 3a, 3b) kalibriert wird durch Speichern der ermittelten Kamerakalibrierungsdaten (kal1, kal2; kalla, kal1b, kal2a, kal2b) zusammen mit Verarbeitungseinrichtungs-Korrekturdaten (norm1, norm2; norm1a, norm1b, norm2a, norm2b) der Verarbeitungseinrichtung (3; 3a, 3b) im Speicher (7-1, 7-2) der Kamera (5-1, 5-2; 5-1a, 5-2b).

**Claims**

**1.** System (1), comprising:

• a processing device (3; 3a, 3b); and
• an exchangeable camera (5-1, 5-2; 5-1a, 5-2b) connected thereto for detecting a machine-readable security feature of a valuable document;
• wherein the system (1) is calibrated by means of processing device correction data (norm1, norm2; norm1a, norm1b, norm2a, norm2b), which relate to characteristics of the processing device (3; 3a, 3b), and camera calibration data (kal1, kal2; kalla, kal2b), which relate to characteristics of the processing device (3; 3a, 3b) and of the camera (5-1, 5-2; 5-1a, 5-2b) connected thereto,
• wherein the camera (5-1, 5-2; 5-1a, 5-2b) comprises a memory (7-1, 7-2) configured to store the processing device correction data (norm1, norm2; norm1a, norm1b, norm2a, norm2b) and the camera calibration data (kal1, kal2; kalla, kal2b) relating to the system (1) in which the calibration is carried out; and
• wherein the processing device (3; 3a, 3b) comprises a memory (23, 25) configured to store the processing device correction data (norm1, norm2; norm1a, norm1b, norm2a, norm2b) and the camera calibration data (kal1, kal2; kalla, kal2b) relating to the system (1) in which operation for detecting a machine-readable security feature of the valuable document is carried out;

wherein the processing device (3; 3a, 3b) is configured to calculate the camera calibration data (kal1, kal2; kalla, kal2b) - to be stored in the memory (23) of the processing device (3; 3a, 3b) - of the system (1) in which operation for detecting a machine-readable security feature of the valuable document is carried out, by weighting the camera calibration data (kal1, kal2; kalla, kal2b) stored in the memory (7-1, 7-2) of the camera (5-1, 5-2; 5-1a, 5-2b) with the processing device correction data (norm1, norm2; norm1a, norm1b, norm2a, norm2b) stored in the memory (7-1, 7-2) of the camera (5-1, 5-2; 5-1a, 5-2b) and with the processing device correction data (norm1, norm2; norm1a, norm1b, norm2a, norm2b) stored in the memory (25) of the processing device (3; 3a, 3b) .

2.  System (1) according to Claim 1,
    wherein the camera (5-1, 5-2; 5-1a, 5-2b) comprises an image sensor, preferably a contact image sensor, and an illumination means.

3.  System (1) according to Claim 2,
    wherein the illumination means is an LED which emits radiation in a spectrum coordinated with the spectrum of the image sensor.

4.  System (1) according to Claim 3,
    wherein the camera (5-1, 5-2; 5-1a, 5-2b) is embodied as a camera pair comprising a first and a second camera (5-1) and wherein the first camera (5-1) is configured to detect reflected light that is emitted by the LED and is reflected by the valuable document, and the second camera (5-2) is configured to detect transmitted light that is emitted by the LED and passes through the valuable document.

5.  System (1) according to any of the preceding claims,
    wherein the camera calibration data (kal1, kal2; kalla, kal2b) comprise at least one of the following items of information:

    • a white reference value of the camera;
    • a camera illumination value;
    • a camera colour value;
    • a distance value of the camera with respect to the valuable document;
    • a transport speed value of the valuable document relative to the camera.

6.  System (1) according to any of the preceding claims,
    wherein the processing device correction data (norm1, norm2; norm1a, norm1b, norm2a, norm2b) comprise at least one of the following items of information:

    • a camera reference voltage;
    • a camera bright level voltage;
    • a camera dark level voltage;
    • a camera bright level mean value voltage;
    • a camera dark level mean value voltage;
    • an amplification voltage.

7.  System (1) according to any of the preceding claims,
    wherein the memory (7-1, 7-2) of the camera (5-1, 5-2; 5-1a, 5-2b) is a non-volatile memory, preferably an EEPROM.

8.  System (1) according to any of the preceding claims,
    wherein the memory (23, 25) of the processing device (3; 3a, 3b) comprises a non-volatile memory (25), preferably an EEPROM, in which the processing device correction data (norm1, norm2; norm1a, norm1b, norm2a, norm2b) are stored, and a volatile memory (23), preferably a RAM, in which the camera calibration data (kal1, kal2; kalla, kal2b) are stored.

9.  System (1) according to any of the preceding claims,
    wherein the valuable document is one of the following:

    • a banknote;
    • a cheque;
    • an identity card;
    • a passport;
    • a ticket;
    • a share document.

**10.** Method for exchanging a camera (5-1a, 5-2b) in a system (1) according to Claims 1-9, comprising a processing device (3b) and an exchangeable camera (5-1a, 5-1b) connected thereto for detecting a machine-readable security feature of a valuable document, wherein the method comprises:

• exchanging a first camera, which is connected to a first processing device (3a), for a second camera (5-2b), which is calibrated by means of a second processing device and which has second camera calibration data (kal2b) and second processing device correction data (norm2b) in a memory (7-2),
• reading out, by means of the first processing device (3a), the second camera calibration data (kal2b) and the second processing device correction data (norm2b) from the memory (7-2) of the second camera (5-2b),
• calculating, by means of the first processing device (3a), adapted camera calibration data (kal2') for the system (1) comprising first processing device (3a) and second camera (5-2b) by weighting the second camera calibration data (kal2b) with the second processing device correction data (norm2b) and with first processing device correction data (norm2a) stored in a memory (25) of the first processing device (3a), and
• applying, by means of the first processing device (3a), the adapted camera calibration data (kal2b) by means of storage in the memory (23, 25) of the first processing device (3a).

**11.** Method according to Claim 10,
wherein the processing device correction data (norm1, norm2; norm1a, norm1b, norm2a, norm2b) are obtained by:

• connecting a normalization device (51), which simulates a calibrated camera, to the processing device (3; 3a, 3b),
• outputting, by means of the normalization device (51), a simulated camera signal (n1, n2), and
• determining, by means of the processing device (3; 3a, 3b), the processing device correction data (norm1, norm2; norm1a, norm1b, norm2a, norm2b) on the basis of the simulated camera signal (n1, n2).

**12.** Method according to Claim 11,
wherein the processing device (3; 3a, 3b) is normalized using the normalization device (51) by storing the determined processing device correction data (norm1, norm2; norm1a, norm1b, norm2a, norm2b) in the memory (25) of the processing device (3; 3a, 3b).

**13.** Method according to Claim 12,
wherein the camera calibration data (kal1, kal2; kalla, kal1b, kal2a, kal2b) are obtained by:

• connecting a camera (5-1, 5-2; 5-1a, 5-2b) to be calibrated to the normalized processing device (3; 3a, 3b),
• detecting, by means of the camera (5-1, 5-2; 5-1a, 5-2b), a calibration standard and outputting a corresponding camera signal (k1, k2) to the processing device (3; 3a, 3b), and
• determining the camera calibration data (kal1, kal2; kalla, kal1b, kal2a, kal2b) on the basis of the camera signal (k1, k2) that is output to the processing device (3; 3a, 3b) in response to the calibration standard.

**14.** Method according to Claim 13,
wherein the camera (5-1, 5-2; 5-1a, 5-2b) is calibrated using the normalized processing device (3; 3a, 3b) by storing the determined camera calibration data (kal1, kal2; kalla, kal1b, kal2a, kal2b) together with processing device correction data (norm1, norm2; norm1a, norm1b, norm2a, norm2b) of the processing device (3; 3a, 3b) in the memory (7-1, 7-2) of the camera (5-1, 5-2; 5-1a, 5-2b).

**Revendications**

**1.** Système (1), comportant :

• un dispositif de traitement (3 ; 3a, 3b) ; et
• une caméra (5-1, 5-2 ; 5-1a, 5-2b) connectée sur celui-ci et interchangeable, destinée à détecter un signe distinctif de sécurité lisible par machine d'un document de valeur ;
• le système (1) étant calibré au moyen de données de correction de dispositif de traitement (norm1, norm2 ; norm1a, norm1b, norm2a, norm2b), lesquelles concernent des caractéristiques du dispositif de traitement (3 ; 3a, 3b), et de données de calibrage de la caméra (kal1, kal2 ; kal1a, kal2b), lesquelles concernent des caractéristiques du dispositif de traitement (3 ; 3a, 3b) et de la caméra (5-1, 5-2 ; 5-1a, 5-2b) qui y est connectée,
• la caméra (5-1, 5-2 ; 5-1a, 5-2b) comportant une mémoire (7-1, 7-2) qui est aménagée pour mémoriser les données de correction de dispositif de traitement (norm1, norm2 ; norm1a, norm1b, norm2a, norm2b) et les données de calibrage de la caméra (kal1, kal2 ; kal1a, kal2b) concernant le système (1) dans lequel a lieu le calibrage ; et
• le dispositif de traitement (3 ; 3a, 3b) comportant une mémoire (23, 25) qui est aménagée pour mémoriser les données de correction de dispositif de traitement (norm1, norm2 ; norm1a, norm1b, norm2a, norm2b) et les données de calibrage de la caméra (kal1, kal2 ; kal1a, kal2b) concernant le système (1) dans lequel s'effectue la pratique de détection d'un signe distinctif de sécurité lisible par machine du document de valeur,

le dispositif de traitement (3 ; 3a, 3b) étant aménagé pour calculer les données de calibrage de la caméra (kal1, kal2 ; kal1a, kal2b) qui doivent être mémorisées dans la mémoire (23) du dispositif de traitement (3 ; 3a, 3b) du système (1) dans lequel s'effectue la pratique de détection d'un signe distinctif de sécurité lisible par machine du document de valeur, par pondération des données de calibrage de la caméra (kal1, kal2 ; kal1a, kal2b) mémorisées dans la mémoire (7-1, 7-2) de la caméra (5-1, 5-2 ; 5-la, 5-2b) avec les données de correction de dispositif de traitement (norm1, norm2 ; norm1a, norm1b, norm2a, norm2b) mémorisées dans la mémoire (7-1, 7-2) de la caméra (5-1, 5-2 ; 5-la, 5-2b) et avec les données de correction de dispositif de traitement (norm1, norm2 ; norm1a, norm1b, norm2a, norm2b) mémorisées dans la mémoire (25) du dispositif de traitement (3 ; 3a, 3b).

2. Système (1) selon la revendication 1,
la caméra (5-1, 5-2 ; 5-1a, 5-2b) comportant un capteur d'image, de préférence un capteur d'image à contact, et un moyen d'éclairage.

3. Système (1) selon la revendication 2,
le moyen d'éclairage étant une LED, laquelle émet un rayonnement dans un spectre qui est adapté au spectre du capteur d'images.

4. Système (1) selon la revendication 3,
la caméra (5-1, 5-2 ; 5-1a, 5-2b) étant conçue sous la forme d'une paire de caméras dotée de première et deuxième caméras (5-1) et la première caméra (5-1) étant aménagée pour enregistrer de la lumière incidente, laquelle est émise par la LED et réfléchie par le document de valeur, et la deuxième caméra (5-2) étant aménagée pour enregistrer de la lumière transmise, laquelle est émise par la LED et traverse le document de valeur.

5. Système (1) selon l'une quelconque des revendications précédentes, les données de calibrage de la caméra (kal1, kal2 ; kal1a, kal2b) comportant au moins l'une des informations suivantes :

   • une valeur de référence de blanc de la caméra ;
   • une valeur d'éclairage de la caméra ;
   • une valeur chromatique de la caméra ;
   • une valeur de distance de la caméra par rapport au document de valeur ;
   • une valeur de vitesse de transport du document de valeur par rapport à la caméra.

6. Système (1) selon l'une quelconque des revendications précédentes, les données de correction de dispositif de traitement (norm1, norm2 ; norm1a, norm1b, norm2a, norm2b) comportant au moins l'une des informations suivantes :

   • une tension de référence de la caméra ;
   • une tension de niveau clair de la caméra ;
   • une tension de niveau foncé de la caméra ;
   • une tension de valeur moyenne de niveau clair de la caméra ;
   • une tension de valeur moyenne de niveau foncé de la caméra ;
   • une tension d'amplification.

7. Système (1) selon l'une quelconque des revendications précédentes, la mémoire (7-1, 7-2) de la caméra (5-1, 5-2 ; 5- 1a, 5-2b) étant une mémoire non volatile, de préférence une EEPROM.

8. Système (1) selon l'une quelconque des revendications précédentes, la mémoire (23, 25) du dispositif de traitement (3 ; 3a, 3b) comportant une mémoire (25) non volatile, de préférence une EEPROM, dans laquelle sont mémorisées les données de correction de dispositif de traitement (norm1, norm2 ; norm1a, norm1b, norm2a, norm2b), et une mémoire (23) volatile, de préférence une RAM, dans laquelle sont mémorisées les données de calibrage de la caméra (kal1, kal2 ; kal1a, kal2b) .

9. Système (1) selon l'une quelconque des revendications précédentes, le document de valeur étant l'un des suivants :

- un billet de banque ;
- un chèque ;
- un justificatif d'identité ;
- un passeport ;
- un permis de conduire ;
- un certificat d'actions.

10. Procédé, destiné à remplacer une caméra (5-1a, 5-2b) dans un système (1) selon la revendication 1 à 9, pourvu d'un dispositif de traitement (3b) et d'une caméra (5-1a, 5-1b) connectée sur celui-ci et interchangeable, destinée à détecter un signe distinctif de sécurité lisible par machine d'un document de valeur, le procédé comportant les étapes consistant à :

- remplacer une première caméra, laquelle est connectée sur un premier dispositif de traitement (3a) par une deuxième caméra (5-2b), calibrée au moyen d'un deuxième dispositif de traitement, lequel comporte dans une mémoire (7-2) des deuxièmes données de calibrage de la caméra (kal2b) et des deuxièmes données de correction de dispositif de traitement (norm2b),
- lire, à l'aide du premier dispositif de traitement (3a), les deuxièmes données de calibrage de la caméra (kal2b) et les deuxièmes données de correction de dispositif de traitement (norm2b) dans la mémoire (7-2) de la deuxième caméra (5-2b),
- calculer, à l'aide du premier dispositif de traitement (3a) des données de calibrage de la caméra (kal2') adaptées pour le système (1) provenant du premier dispositif de traitement (3a) et de la deuxième caméra (5-2b), par pondération des deuxièmes données de calibrage de la caméra (kal2b) avec les deuxièmes données de correction de dispositif de traitement (norm2b) et des premières données de correction de dispositif de traitement (norm2a) mémorisées dans une mémoire (25) du premier dispositif de traitement (3a), et
- utiliser, à l'aide du premier dispositif de traitement (3a), des données de calibrage de la caméra (kal2b) adaptées par mémorisation dans la mémoire (23, 25) du premier dispositif de traitement (3a).

11. Procédé selon la revendication 10, les données de correction de dispositif de traitement (norm1, norm2 ; norm1a, norm1b, norm2a, norm2b) étant obtenues en :

- connectant un dispositif de normalisation (51), lequel simule une caméra calibrée sur le dispositif de traitement (3 ; 3a, 3b),
- délivrant, à l'aide du dispositif de normalisation (51) un signal de caméra simulé (n1, n2), et
- déterminant, à l'aide du dispositif de traitement (3 ; 3a, 3b) les données de correction de dispositif de traitement (norm1, norm2 ; norm1a, norm1b, norm2a, norm2b), sur la base du signal de caméra simulé (n1, n2).

12. Procédé selon la revendication 11, le dispositif de traitement (3 ; 3a, 3b) étant normalisé en utilisant le dispositif de normalisation (51), par mémorisation des données de correction de dispositif de traitement (norm1, norm2 ; norm1a, norm1b, norm2a, norm2b) déterminées dans la mémoire (25) du dispositif de traitement (3 ; 3a, 3b).

13. Procédé selon la revendication 12, les données de calibrage de la caméra (kal1, kal2 ; kal1a, kal1b, kal2a, kal2b) étant obtenues en :

- connectant une caméra (5-1, 5- 2 ; 5-1a, 5-2b) qui doit être calibrée sur le dispositif de traitement (3 ; 3a, 3b) normalisé,
- enregistrant, à l'aide de la caméra (5-1, 5-2 ; 5-1a, 5-2b) un étalon de calibrage et en délivrant un signal de caméra (k1, k2) correspondant au dispositif de traitement (3 ; 3a, 3b), et
- déterminant les données de calibrage de la caméra (kal1, kal2 ; kal1a, kal1b, kal2a, kal2b) sur la base du signal de caméra (k1, k2), lequel est délivré au dispositif de traitement (3 ; 3a, 3b) en réponse à l'étalon de calibrage.

14. Procédé selon la revendication 13,

la caméra (5-1, 5-2 ; 5-1a, 5-2b) étant calibrée en utilisant le dispositif de traitement (3 ; 3a, 3b) normalisé, par mémorisation dans la mémoire (7-1, 7-2) de la caméra (5-1, 5-2 ; 5-la, 5-2b) des données de calibrage déterminées de la caméra (kal1, kal2 ; kal1a, kal1b, kal2a, kal2b), conjointement avec des données de correction de dispositif de traitement (norm1, norm2 ; norm1a, norm1b, norm2a, norm2b) du dispositif de traitement (3 ; 3a, 3b).

Figur 1

Figur 2

Figur 2A

Figur 2B

Figur 3

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007038752 A1
- JP H04881 A